# FASCICULE DE BREVET EUROPEEN

(11) **EP 2 454 142 B1**
(45) Date de publication et mention de la délivrance du brevet: **28.02.2018**
(21) Numéro de dépôt: 09781537.7
(22) Date de dépôt: 06.08.2009
(51) Int. Cl.: B61F 9/00, B62D 1/26

(54) **METHODE ET DISPOSITIF DE VERROUILLAGE D'UN SYSTEME DE GUIDAGE D'UN VEHICULE GUIDE**
VERFAHREN UND VORRICHTUNG FÜR DIE SPERRE EINES SYSTEMS ZUR LENKUNG EINES FAHRERLOSEN FAHRZEUGES
METHOD AND DEVICE FOR LOCKING A SYSTEM FOR GUIDING A GUIDED VEHICLE

(30) Priorité: 13.07.2009 EP 09290562
(43) Date de publication de la demande: 23.05.2012
(73) Titulaire: Siemens S.A.S., 93527 Saint-Denis Cedex (FR)
(72) Inventeur: CLARISSOU, Yves, F-75014 Paris (FR)
(74) Mandataire: Maier, Daniel Oliver
(86) Numéro de dépôt international: PCT/EP2009/060179
(87) Numéro de publication internationale: WO 2011/006545

(56) Documents cités:
- FR-A1- 2 741 582
- FR-A1- 2 778 161
- FR-A1- 2 860 480
- FR-A1- 2 909 061

## Description

La présente invention concerne une méthode et un dispositif de verrouillage d'un système de guidage d'un véhicule guidé par au moins un rail selon le préambule des revendications 1 et 6 (cf. par exemple FR 2 778 161 A, correspondant aux préambules desdites revendications). En particulier, l'invention se rapporte au blocage ou verrouillage automatique d'un système de guidage bidirectionnel d'un véhicule guidé. Par « véhicule guidé », il est fait référence aux moyens de transports en commun tels que des bus, trolleybus, tramways, métros, trains ou unités de train, etc., dont le déplacement est guidé au moyen d'au moins un rail de guidage qui oriente chacun des essieux directeurs dudit véhicule, en particulier via un dispositif de guidage monté sur chacun desdits essieux directeurs. Notamment, ledit véhicule guidé est un véhicule monté sur pneumatiques, utilisant un pouvoir directeur des pneumatiques pour reprendre des efforts transversaux liés à une dynamique du véhicule.

Un exemple de dispositif de guidage est par exemple un bras simple ou double relié audit essieu à la manière d'un timon et s'étendant vers le rail de guidage, ledit bras portant par exemple à son extrémité libre un couple de galets de guidage disposés de façon à rouler sur le rail tout en l'enserrant dans une emprise afin de suivre la trajectoire décrite par le rail. Pour des raisons de stabilité et de fiabilité, le dispositif de guidage précède l'essieu directeur au cours de leur déplacement. Ainsi, si le véhicule guidé fonctionne selon un unique sens de marche, i.e. les roues dudit véhicule ont toujours le même sens de rotation, alors ledit dispositif de guidage est situé en avant de l'essieu directeur par rapport à son déplacement le long de la trajectoire décrite par le rail. Si le trajet résultant de ladite trajectoire ne comporte pas de boucles permettant au véhicule de manoeuvrer un demi-tour afin de parcourir le même trajet en sens inverse, alors le véhicule doit pouvoir fonctionner dans deux sens de marche correspondant respectivement à deux sens de rotation des roues du véhicule et permettant audit véhicule de parcourir un même trajet dans un premier sens, puis dans un deuxième sens, le premier sens étant l'inverse du deuxième sens.

Dans ce cas, le dispositif de guidage doit être doublé à chaque essieu directeur par un dispositif de guidage similaire dirigé en sens inverse, de sorte que chacun des deux sens de marche soit associé à un dispositif de guidage qui, à chaque fois, précède l'essieu directeur dans son déplacement le long de la trajectoire décrite par le rail. Les deux dispositifs de guidage, disposés de part et d'autre de l'essieu directeur en des sens opposés, forment un système de guidage qualifié de bidirectionnel. Chacun des dispositifs de guidage formant le système de guidage bidirectionnel est ainsi utilisé alternativement selon le sens de déplacement du véhicule de sorte que ce soit toujours un dispositif de guidage situé en avant de l'essieu directeur, par rapport à son déplacement, qui guide ledit essieu directeur.

Pour cela, chaque dispositif de guidage formant le système de guidage bidirectionnel présente généralement deux états de guidage correspondant à deux modes de fonctionnement, lesdits états de guidage étant commandés par un dispositif de verrouillage:
- un premier état de guidage actif correspondant à un mode directeur du dispositif de guidage, caractérisé par une configuration rigide de celui-ci, résultant notamment d'un verrouillage de la timonerie et assurant ainsi un guidage précis audit véhicule,
- un second état de guidage passif correspondant à un mode suiveur du dispositif de guidage, caractérisé par une configuration libre de celui-ci et résultant notamment d'une complète liberté de mouvement de la timonerie qui n'a plus aucune influence sur le guidage du véhicule.

Ainsi, selon le sens de déplacement dudit véhicule guidé, le dispositif de guidage en avant d'un desdits essieu directeur est dans un mode directeur, tandis que l'autre, i.e. le dispositif de guidage arrière, est dans le mode suiveur, de sorte que un et un seul des deux dispositifs de guidage guide le véhicule. Lorsque le sens de déplacement du véhicule est inversé, le dispositif de guidage qui était précédemment dans le mode directeur devient le dispositif de guidage se trouvant en arrière de l'essieu relativement au déplacement du véhicule, et en conséquence, il travaillera en mode suiveur. Et au contraire, le dispositif de guidage qui travaillait précédemment en mode suiveur se trouve alors en avant dudit essieu directeur, et fonctionnera donc en mode directeur. Ainsi, lorsque le sens du déplacement du véhicule guidé, ne pouvant faire demi-tour sur son trajet, est inversé, les modes de fonctionnement relatifs aux dispositifs de guidage formant le système de guidage bidirectionnel sont eux aussi inversés, i.e. le dispositif de guidage directeur devient suiveur, et le dispositif de guidage suiveur devient directeur, à chaque inversion du sens du déplacement du véhicule guidé.

On connaît ainsi par exemple des dispositifs de verrouillage de systèmes de guidage bidirectionnel comprenant:
- un dispositif d'alimentation en énergie pneumatique, hydraulique ou électrique, apte à alimenter en énergie au moins un vérin, respectivement pneumatique, hydraulique ou électrique, à simple ou double tige, ledit vérin étant apte à verrouiller ou libérer le dispositif de guidage, afin de le faire fonctionner dans le mode directeur, ou respectivement, dans le mode suiveur,
- un dispositif de lecture de déplacement apte à déterminer et communiquer une information caractérisant le sens de déplacement dudit véhicule,
- un dispositif de commande d'alimentation apte à commander l'alimentation en énergie, fournie par ledit dispositif d'alimentation, de chacun desdits vérins en fonction de ladite information caractérisant le sens de déplacement du véhicule,
- un dispositif de contrôle apte à vérifier une cohérence entre le sens du déplacement du véhicule guidé et le mode de fonctionnement de chacun des dispositifs de guidage formant le système de guidage.

Malheureusement, les dispositifs de verrouillage actuels des systèmes de guidage liés aux véhicules guidés sont encombrants, volumineux et relativement complexes. De plus, ils peuvent générer des erreurs relatives à la commande du mode directeur ou suiveur des dispositifs de guidage, ce qui peut engendrer des situations dangereuses conduisant à une perte de trajectoire du véhicule guidé.

Un but de la présente invention est de proposer une méthode et un dispositif de verrouillage d'un système de guidage bidirectionnel d'un véhicule guidé qui soient simples, peu encombrants, peu coûteux et de plus, fiables et sûrs.

Dans ce but, un dispositif et une méthode sont proposés par le contenu des revendications 1 et 6. Un ensemble de sous-revendications présente également des avantages de l'invention.

A partir d'une méthode de verrouillage d'un système de guidage, en particulier un système de guidage bidirectionnel, d'un véhicule guidé par au moins un rail, comprenant:
- une association d'un premier et d'un second vérin avec respectivement un premier et second dispositif de guidage appartenant au système de guidage d'un essieu directeur du véhicule guidé, lesdits dispositifs de guidage étant en particulier similaires, solidaires audit essieu directeur et disposés en sens opposé de part et d'autre de celui-ci,
- au moins un premier et second état de configuration desdits vérins plaçant leurs dispositifs de guidage respectifs dans respectivement un premier et un second état de guidage, ledit premier état de guidage permettant d'orienter ledit essieu directeur, et ledit second état de guidage permettant au dispositif de guidage de suivre librement une orientation dudit essieu directeur,
- une alimentation en énergie desdits vérins par un dispositif d'alimentation en énergie, en particulier en énergie pneumatique, hydraulique ou électrique, pour commuter les états de configuration de chaque vérin,
la méthode selon l'invention est caractérisée en ce qu'elle comporte :
- un couplage du dispositif d'alimentation à au moins un organe rotatif dont une rotation est liée mécaniquement au déplacement du véhicule, par exemple une roue motrice ou non motrice du véhicule, en particulier de sorte qu'un fonctionnement dudit dispositif d'alimentation soit directement couplé à la rotation dudit organe rotatif,
- une commutation de l'alimentation en énergie desdits vérins entraînant une commutation de l'état de configuration desdits vérins en fonction d'un changement d'un sens de ladite rotation dudit organe de rotatif, ledit changement étant transmis au dispositif d'alimentation au moyen dudit couplage.

En particulier, selon une caractéristique additionnelle telle que définie dans la revendication dépendante 2, la méthode de verrouillage selon l'invention est caractérisée par un contrôle, notamment par un dispositif de contrôle, de l'état de configuration de chacun desdits vérins afin de s'assurer du fonctionnement correct desdits vérins, en cohérence avec un sens de déplacement du véhicule. Avantageusement, le sens de rotation dudit organe rotatif est directement lié au sens de déplacement dudit véhicule guidé. En effet, ledit organe rotatif est caractérisé par deux sens de rotation correspondant aux deux sens possibles de déplacement dudit véhicule guidé. Ainsi, un premier sens de rotation dudit organe rotatif correspond à un premier sens de déplacement dudit véhicule guidé, tandis que le deuxième sens de rotation dudit organe rotatif, i.e. le sens inverse audit premier sens de rotation, correspond à un déplacement dudit véhicule guidé selon le second sens de déplacement, ledit second sens de déplacement étant le sens inverse de déplacement audit premier sens de déplacement. Ainsi, la méthode selon l'invention garantit intrinsèquement la cohérence entre le sens du déplacement du véhicule et l'état de configuration des vérins. Il en résulte que ledit contrôle de l'état de configuration des vérins est libre d'une vérification directe de ladite cohérence, mais a au contraire comme but premier et direct une recherche et une prévention des pannes du dispositif de verrouillage, comme par exemple, le grippage d'un vérin, ou une baisse de pression d'un circuit hydraulique. La cohérence entre le sens de rotation dudit organe rotatif et l'état de configuration desdits vérins est, quant à elle, uniquement vérifiée indirectement, au travers du contrôle de l'état de configuration desdits vérins.

De manière avantageuse, la méthode de verrouillage selon une caractéristique additionnelle de l'invention est notamment caractérisée par une production de l'énergie nécessaire à l'alimentation en énergie desdits vérins dépendante d'une énergie mécanique de rotation créée par la rotation dudit organe rotatif. En particulier, ladite production est dépendante de ladite énergie mécanique de rotation en ce que cette dernière est par exemple:
- utilisée afin de créer un signal de commande dépendant du sens de rotation dudit organe rotatif et transmis au moyen dudit couplage audit dispositif d'alimentation afin d'entraîner ladite commutation de l'alimentation en énergie, ledit signal de commande étant ainsi apte à commander la production de ladite énergie d'alimentation en fonction dudit sens de rotation dudit organe rotatif;
- transmise audit dispositif d'alimentation au moyen dudit couplage, puis directement transformée, en particulier par le dispositif d'alimentation, en énergie d'alimentation desdits vérins, ladite transformation d'énergie mécanique de rotation en énergie d'alimentation desdits vérins, permettant, selon le sens de rotation dudit organe rotatif, ladite commutation d'alimentation en énergie.

Avantageusement, ledit couplage peut alors être un couplage mécanique transmettant ladite énergie mécanique de rotation, ainsi que des changements de sens de rotation dudit organe rotatif, audit dispositif d'alimentation, qui pourrait comprendre par exemple un alternateur ou une pompe hydraulique actionnée par ladite rotation dudit organe rotatif au moyen dudit couplage, ou encore, de manière non restrictive, un couplage électrique, afin de transmettre ledit signal de commande audit dispositif d'alimentation. Ledit signal de commande est en particulier un signal binaire ayant deux valeurs, une première valeur caractérisant un premier sens de déplacement du véhicule guidé, et une deuxième valeur caractérisant un second sens de déplacement, inverse audit premier sens, du véhicule guidé. Le dispositif d'alimentation alimente, en fonction de la valeur dudit signal de commande, les vérins du dispositif de guidage situé en avant d'un essieu directeur, de sorte qu'un changement de ladite valeur du signal entraîne ladite commutation de l'alimentation en énergie, le dispositif d'alimentation pouvant, quant à lui, être solidairement couplé à l'organe de rotation afin de produire, par transformation de l'énergie mécanique de rotation, ladite énergie d'alimentation.

De plus, la méthode selon l'invention permet avantageusement d'obtenir un dispositif de verrouillage énergétiquement autonome dans le cas particulier où l'énergie mécanique de rotation fournie par ledit organe rotatif est l'unique énergie servant au fonctionnement dudit dispositif de verrouillage. Dans ce cas, la rotation dudit organe rotatif est l'unique source énergétique dudit dispositif de verrouillage qui devient énergétiquement autonome. Une illustration de dispositif de verrouillage énergétiquement autonome est par exemple l'entraînement d'une pompe rotative par le mouvement rotatif de l'organe rotatif: ledit organe rotatif transmet, au moyen d'un couplage mécanique par arbre de transmission, son mouvement de rotation, i.e. sa rotation, à un axe de rotation de la pompe rotative, ladite pompe rotative étant connectée à au moins deux circuits d'alimentation, un premier circuit reliant une première sortie de ladite pompe au vérin d'un premier dispositif de guidage d'un essieu directeur, une deuxième sortie connectée au vérin d'un deuxième dispositif de guidage du même essieu directeur, mais dirigé en sens inverse dudit premier dispositif de guidage, ladite pompe alimentant automatiquement en fonction du sens de rotation dudit organe rotatif uniquement le circuit d'alimentation du dispositif de guidage situé à l'avant de l'essieu directeur par rapport au sens de déplacement dudit véhicule. Avantageusement, un tel dispositif de verrouillage énergétiquement autonome est libre d'un dispositif de lecture de déplacement, d'un dispositif de commande d'alimentation et de toute source d'énergie autre que la rotation dudit organe rotatif.

Avantageusement, la méthode de verrouillage selon une caractéristique additionnelle non revendiquée de l'invention est en particulier caractérisée en ce que ledit organe rotatif est une roue servant au déplacement dudit véhicule. De manière similaire à l'exemple précédemment décrit et illustrant un dispositif de verrouillage énergétiquement autonome, la rotation de la roue est par exemple transmise au moyen d'un couplage par arbre à une pompe, en particulier une pompe réversible tel une pompe hydraulique rotative réversible, comprise dans ledit dispositif d'alimentation et apte à produire ladite énergie nécessaire à l'alimentation en énergie desdits vérins à partir de l'énergie mécanique de rotation de la roue. Pour un premier sens de rotation de la roue correspondant à un premier sens de déplacement du véhicule, ladite pompe réversible alimente en énergie hydraulique les vérins permettant le verrouillage de la timonerie du dispositif de guidage avant et assurant, en conséquence, un guidage précis dudit véhicule, alors que, au même moment, les autres vérins, associés au dispositif de guidage arrière, sont dans un état de configuration permettant au dispositif de guidage de suivre librement une orientation de l'essieu directeur. Pour le second sens de rotation de la roue correspondant à un sens de déplacement inverse audit premier sens de déplacement dudit véhicule, la pompe réversible fonctionne de manière inverse de sorte qu'elle commute l'alimentation des vérins, i.e. les vérins qui assuraient auparavant la rigidité et le verrouillage de la timonerie sont libérés, et les vérins qui permettaient auparavant une orientation libre du dispositif de guidage sont alimentés en énergie de sorte que le dispositif de guidage situé avant l'essieu directeur par rapport au déplacement du véhicule, soit le dispositif de guidage qui dirige le véhicule.

En particulier et avantageusement, tout changement dudit sens de rotation dudit organe rotatif induit automatiquement et directement ladite commutation desdits états de configuration desdits vérins. En effet, un changement du sens de rotation dudit organe rotatif entraîne directement et automatiquement par couplage ladite commutation de l'alimentation en énergie desdits vérins par ledit dispositif d'alimentation, de sorte que les vérins associés au dispositif de guidage avant soient alimentés en énergie et les vérins associés au dispositif de guidage arrière soient coupés de l'alimentation en énergie, ladite coupure en alimentation mettant lesdits vérins associés au dispositif de guidage arrière dans ledit second état de guidage, ce qui a pour effet de libérer la timonerie. De manière particulièrement avantageuse, ladite commutation de l'alimentation en énergie desdits vérins est effectuée par ladite pompe en fonction dudit sens de rotation dudit organe rotatif, assurant une cohérence directe entre l'alimentation en énergie desdits vérins et le sens de déplacement du véhicule guidé.

A partir d'un dispositif de verrouillage d'un système de guidage, en particulier un système de guidage bidirectionnel, d'un véhicule guidé par au moins un rail, comprenant:
- un premier et un second vérin, en particulier à simple ou double tige, pouvant être associés ou en particulier solidarisés, respectivement à un premier et un second dispositif de guidage appartenant au système de guidage d'un essieu directeur du véhicule guidé, chacun desdits vérins comportant au moins deux états de configurations caractéristiques: un premier état de configuration capable de placer le dispositif de guidage auquel le vérin est associable (ou solidarisé) dans un premier état de guidage permettant d'orienter ledit essieu directeur, et un second état de configuration capable de placer le dispositif de guidage auquel le vérin est associable (ou solidarisé) dans un second état de guidage permettant au dispositif de guidage de suivre librement une orientation dudit essieu directeur,
- un dispositif d'alimentation en énergie, en particulier en énergie pneumatique, hydraulique ou électrique, apte à alimenter en énergie lesdits vérins pour commuter l'état de configuration de chacun desdits vérins, le dispositif de verrouillage selon l'invention est caractérisé en ce que
- le dispositif d'alimentation est accouplable, au moyen d'un organe de couplage, à au moins un organe rotatif dont une rotation est liée mécaniquement au déplacement du véhicule de sorte qu'un changement d'un sens de rotation dudit organe rotatif est transmis audit dispositif d'alimentation par ledit organe de couplage et entraîne une commutation de l'état de configuration desdits vérins.

Le dispositif de verrouillage selon une caractéristique additionnelle de l'invention est en particulier caractérisé en ce que ledit dispositif d'alimentation est apte à automatiquement commuter ledit état de configuration desdits vérins lors d'un changement du sens de rotation dudit organe rotatif, de sorte que le dispositif de verrouillage verrouille automatiquement dans un mode directeur le dispositif de guidage avant, i.e. situé avant l'essieu directeur par rapport au déplacement du véhicule. En effet, un changement du sens de rotation dudit organe rotatif entraîne automatiquement une commutation de l'alimentation en énergie desdits vérins par ledit dispositif d'alimentation, et donc une configuration du dispositif de guidage avant en mode directeur et du dispositif arrière en mode suiveur.

De plus, le dispositif de verrouillage selon une caractéristique additionnelle de l'invention est en particulier caractérisé en ce qu'un dispositif de contrôle est apte à vérifier l'état de configuration de chacun desdits vérins afin de s'assurer d'un fonctionnement correct desdits vérins en cohérence avec un sens de déplacement du véhicule. Avantageusement, ledit dispositif de contrôle permet de détecter une panne d'un vérin, au moyen par exemple, d'au moins un capteur d'une position de la tige du vérin.

D'autre part, le dispositif de verrouillage selon une caractéristique addtionnelle de l'invention est caractérisé en particulier en ce que le dispositif d'alimentation est apte à produire l'énergie d'alimentation desdits vérins en fonction d'une énergie mécanique de rotation créée par la rotation dudit organe rotatif. En particulier, le dispositif d'alimentation est par exemple apte à :
- transformer ladite énergie mécanique de rotation, créée par la rotation dudit organe rotatif, en ladite énergie d'alimentation alimentant lesdits vérins, de sorte que ladite production d'énergie est le fruit d'une transformation d'énergie;
- produire l'énergie d'alimentation desdits vérins en fonction d'un signal de commande créé à partir de ladite énergie mécanique de rotation, transmis par ledit organe de couplage et dépendant du sens de rotation dudit organe rotatif.

Il s'agit par exemple de la transformation d'une énergie mécanique de rotation en une énergie hydraulique ou électrique qui, en fonction du sens de ladite rotation, alimente en énergie le vérin du dispositif de verrouillage situé avant l'essieu directeur, et libère le vérin du dispositif de verrouillage arrière, permettant ainsi de commuter l'état de configuration des vérins associés au guidage du véhicule lors de l'inversion du sens de rotation de l'organe rotatif, soit l'inversion du sens de déplacement du véhicule.

Dans le cas particulier où le dispositif d'alimentation comprend une pompe réversible, tel une pompe hydraulique rotative réversible, ladite pompe réversible est apte à être directement entraînée par ladite rotation dudit organe rotatif, qui peut, de manière avantageuse, simplement être une roue servant au déplacement dudit véhicule, de sorte que l'énergie mécanique de rotation est transformée en énergie hydraulique. En particulier, en fonction du sens de rotation de l'organe rotatif, la pompe réversible pressurisera un circuit hydraulique connecté au vérin appartenant au dispositif de guidage avant, de sorte que ledit vérin soit dans un état de configuration permettant audit dispositif de guidage d'être dans un mode directeur, tandis que le dispositif de guidage arrière sera, au même moment, dans un mode suiveur du fait que, par exemple, le circuit alimentant en énergie hydraulique son vérin ne soit pas pressurisé. De cette façon, ladite pompe réversible est apte à automatiquement commuter lesdits états de configuration desdits vérins en fonction dudit sens de rotation dudit organe rotatif.

Finalement, le dispositif de verrouillage selon une caractéristique additionnelle de l'invention est caractérisé, en particulier, en ce qu'un système de contrôle est apte à communiquer avec chacun desdits dispositifs de contrôle équipant chaque essieu afin de signaler, en particulier à un poste de commande ou au conducteur dudit véhicule guidé, un disfonctionnement d'un dispositif de guidage, ledit disfonctionnement pouvant résulter en une incohérence entre le sens de déplacement dudit véhicule et l'état de configuration desdits vérins.

Des exemples de réalisation et d'application sont fournis à l'aide des figures suivantes :
- Figure 1: exemple de réalisation d'un dispositif de verrouillage d'un système de guidage bidirectionnel selon l'invention,
- Figure 2: exemple de réalisation d'un dispositif d'alimentation en énergie selon l'invention.

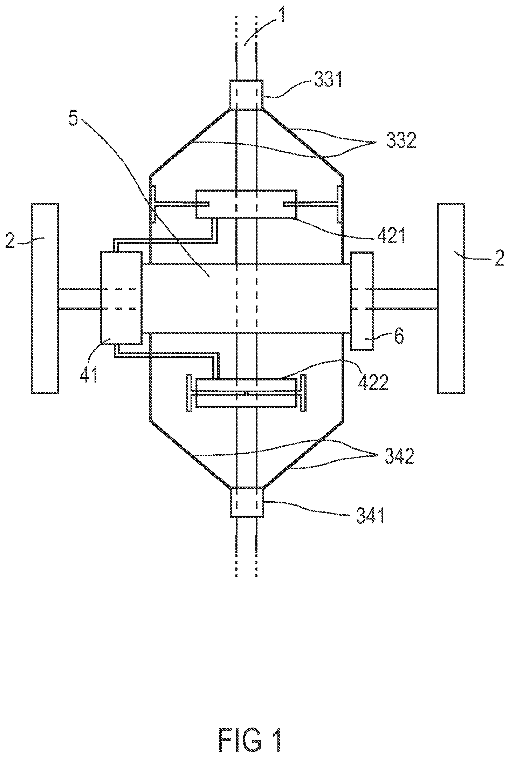

A titre d'exemple, la figure 1 présente un dispositif de verrouillage d'un système de guidage bidirectionnel d'un véhicule guidé par au moins un rail 1, comprenant:
- un premier et un second vérin 421, 422, en particulier à simple ou double tige, associés ou en particulier solidarisés, respectivement à un premier et un second dispositif de guidage 331, 332, 341, 342 appartenant au système de guidage d'un essieu directeur 5 du véhicule guidé, chacun desdits vérins 421, 422 comportant au moins deux états de configurations caractéristiques: un premier état de configuration plaçant le dispositif de guidage auquel le vérin est associé (ou solidarisé) dans un premier état de guidage permettant d'orienter ledit essieu directeur, et un second état de configuration plaçant le dispositif de guidage auquel le vérin est associé (ou solidarisé) dans un second état de guidage permettant au dispositif de guidage de suivre librement une orientation dudit essieu directeur,
- un dispositif d'alimentation 41 en énergie, en particulier en énergie pneumatique, hydraulique ou électrique, apte à alimenter en énergie lesdits vérins 421, 422 pour commuter l'état de configuration de chacun desdits vérins 421, 422,
caractérisé en ce que
- le dispositif d'alimentation 41 est accouplé, au moyen d'un organe de couplage, à au moins un organe rotatif 2 dont une rotation est liée mécaniquement au déplacement du véhicule, de sorte qu'un changement d'un sens de rotation dudit organe rotatif 2 est transmis audit dispositif d'alimentation par ledit organe de couplage et entraîne une commutation de l'état de configuration desdits vérins.

En particulier, le dispositif d'alimentation 41 comprend un moyen de transformation d'énergie connecté auxdits vérins apte à transformer l'énergie mécanique rotative de l'organe rotatif en une énergie apte à permettre un travail mécanique desdits vérins, ledit travail mécanique servant notamment à rigidifier le timon du dispositif de guidage directeur, permettant ainsi d'orienter l'essieu selon la direction définie par la trajectoire du rail. En particulier, ledit moyen de transformation d'énergie est connecté auxdits vérins et accouplé, par ledit organe de couplage, audit organe de rotation 2. Ledit moyen est par exemple un alternateur apte à fournir une énergie électrique servant à commuter l'état de configuration de vérins électriques, ou une pompe pneumatique ou hydraulique servant à pressuriser des vérins respectivement pneumatiques ou hydrauliques connectés à ladite pompe, de sorte que le vérin pressurisé est dans un état apte à permettre audit dispositif de guidage d'orienter l'essieu directeur et le vérin libre de pressurisation garantit une complète liberté de mouvement de la timonerie du dispositif de guidage suiveur.

De plus, un dispositif de contrôle 6 vérifie l'état de configuration de chacun desdits vérins 421, 422 afin de s'assurer d'un fonctionnement correct desdits vérins 421, 422 en cohérence avec un sens de déplacement du véhicule. Le dispositif de contrôle vérifie par exemple une pression interne au vérin en fonction d'un déplacement de la tige du vérin.

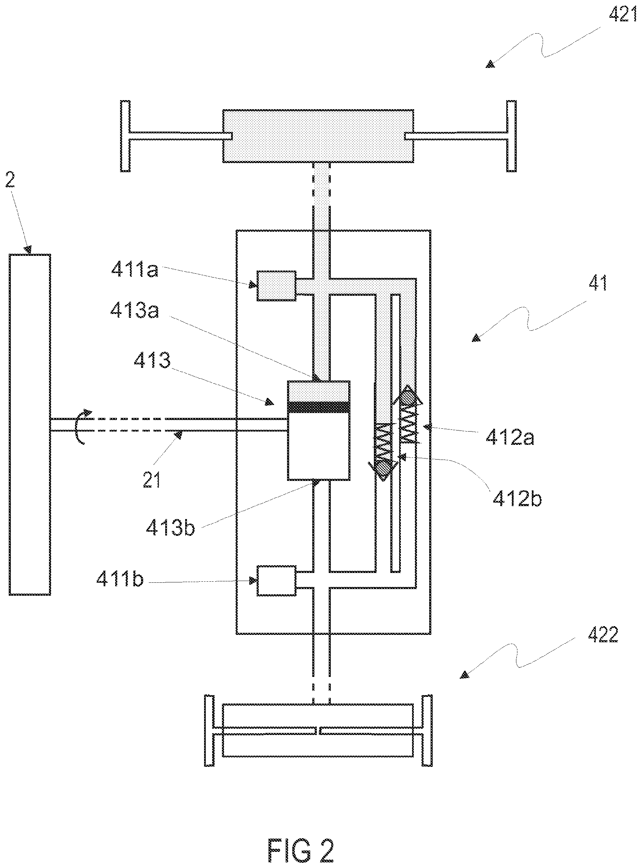

La figure 2 présente un exemple de réalisation d'un dispositif d'alimentation 41 en énergie selon l'invention. Ledit dispositif d'alimentation comprend en particulier une pompe réversible 413 comportant deux sorties 413a, 413b servant à alimenter respectivement deux vérins 421, 422 au moyen respectivement d'un premier et d'un second circuit d'alimentation. Ladite pompe réversible 413 du dispositif d'alimentation 41 est par exemple entraînée par une roue 2 du véhicule par couplage au moyen d'un arbre de transmission 21 apte à transmettre l'énergie mécanique de rotation de la roue 2 à la pompe réversible 413. Ladite pompe réversible 413 est apte à transformer cette énergie mécanique de rotation en énergie hydraulique ou hydrostatique, qui alimente un des deux vérins pour un sens de rotation de ladite roue 2, et l'autre des deux vérins pour l'autre sens de rotation de ladite roue 2. En effet, pour un sens de rotation de la roue 2, ladite pompe réversible 413 alimente en énergie uniquement un et un seul desdits vérins 421, 422 qui se trouve alors dans un état de configuration (travail) permettant au dispositif de guidage auquel il est associé d'orienter l'essieu directeur. Pendant ce temps, l'autre desdits vérins se trouve dans un état de configuration (repos) permettant au dispositif de guidage auquel il est associé de suivre librement une orientation dudit essieu directeur. Lors du changement du sens de rotation de la roue, l'état de configuration desdits vérins est inversé ou autrement dit commuté, de sorte que le vérin qui était dans un état de travail, se trouve dans un état de repos et inversement.

Par exemple, pour un premier sens de rotation de ladite roue 2, la pompe réversible 413 est apte à alimenter en énergie une première sortie 413a connectée au moyen d'un premier circuit à un premier vérin 421, de sorte que ledit premier vérin est associé à ce premier sens de rotation de la roue. Elle peut en particulier alimenter ladite sortie 413a avec un fluide sous pression. A cette fin, ledit fluide est pompé du second circuit via la seconde sortie 413b vers le premier circuit via la première sortie 413a. En particulier, le fluide du circuit lié au vérin dont l'état de configuration (repos) permet au dispositif de guidage auquel il est associé de suivre librement une orientation dudit essieu directeur, i.e. dans notre exemple le fluide du second circuit, est un fluide à basse pression. La pompe réversible est alors apte à pressuriser ce fluide à basse pression, de sorte qu'il soit réinjecté sous une plus haute pression dans le premier circuit via ladite première sortie 413a. De plus, ledit premier circuit comprend au moins un accumulateur hydraulique 411a et un limiteur de pression 412a. En particulier, ledit limiteur de pression 412a relie ledit premier circuit, en état de haute pression, audit second circuit, en état de basse pression, de sorte qu'un excès de pression dudit premier circuit soit dérivé vers ledit second circuit. En d'autres termes, l'excès de fluide pressurisé du premier circuit est réinjecté via le limiteur de pression 412a dans le second circuit.

Inversement, pour le deuxième sens de rotation de ladite roue 2, la pompe réversible 413 fonctionne de manière inverse. En d'autres termes, la pompe réversible est apte à alimenter en énergie la deuxième sortie 413b connectée au moyen du second circuit au deuxième vérin 421, de sorte que ledit deuxième vérin est associé à ce deuxième sens de rotation de la roue. En particulier, elle alimentera ladite deuxième sortie 413b avec un fluide à haute pression, qu'elle aura puisé via la première sortie 413a dans ledit premier circuit dans lequel il se trouvait dans un état de basse pression, puis pressurisé afin de l'injecter dans ledit second circuit. De plus, similairement au premier circuit, ledit second circuit comprend au moins un accumulateur hydraulique 411b et un limiteur de pression 412b apte à relier ledit second circuit, en état de haute pression, audit premier circuit, en état de basse pression, de sorte qu'un excès de pression dudit second circuit soit dérivé vers ledit premier circuit via ledit limiteur de pression. En d'autres termes, l'excès de fluide pressurisé du second circuit est réinjecté via le limiteur de pression 412b dans le premier circuit.

De manière générale, ledit fluide sous haute pression est apte à être utilisé par un des deux vérins afin d'accomplir un travail mécanique servant à commuter son état de configuration dans un état de configuration permettant au dispositif de guidage d'orienter l'essieu directeur. De plus, lors d'une rotation continue de la roue selon un même sens de rotation, la pressurisation par la pompe réversible du fluide dans un desdits circuits est continue, et en conséquence, l'alimentation en énergie hydraulique ou pneumatique du vérin associé au circuit dont le fluide est sous haute pression est elle aussi continue. Avantageusement, l'excès de pression est continuellement dérivé du circuit à haute pression vers le circuit à basse pression par au moins un des limiteurs de pression interconnectant le circuit de haute pression avec le circuit de basse pression. Ainsi, lors d'une rotation continuelle dans un même sens, une fois une pression limite obtenue, ladite pression limite étant définie par le limiteur de pression, toute nouvelle quantité de fluide injectée dans le circuit de fluide à haute pression sera égale à la quantité de fluide en excès que le limiteur de pression dérivera vers le circuit à basse pression, de sorte qu'il y aura équilibre entre fluide injecté dans le circuit pressurisé et fluide dérivé du circuit pressurisé.

Avantageusement, en fonction du sens de rotation de la roue, le limiteur de pression associé au circuit pressurisé comporte un mécanisme permettant de déclencher la pompe dès qu'une pression a atteint la valeur de ladite pression limite et inversement, de maintenir la pompe enclenchée tant que ladite pression limite n'a pas été atteinte.

En résumé, la méthode et le dispositif selon l'invention présentent plusieurs avantages par rapport aux méthodes et dispositifs existants, en ce que:
- ils s'affranchissent de l'utilisation du dispositif de commande d'alimentation et du dispositif de lecture de déplacement, étant donné que par couplage du dispositif d'alimentation avec ledit organe rotatif, le sens de rotation de l'organe rotatif, et donc le sens de déplacement dudit véhicule, commande directement l'alimentation en énergie desdits vérins en cohérence avec le sens de déplacement dudit véhicule;
- ils évitent des erreurs de commande du dispositif d'alimentation ou des erreurs de lecture du dispositif de lecture en garantissant une cohérence entre le sens du déplacement du véhicule et la configuration desdits vérins à partir du couplage direct de l'organe de rotation et du dispositif d'alimentation, de sorte que la méthode et le dispositif selon l'invention sont fiables et sûrs d'un point de vue de la cohérence entre le déplacement du véhicule et l'alimentation en énergie du vérin associé au dispositif de guidage avant;
- ils permettent de se libérer d'un apport d'énergie externe au dispositif de verrouillage, comme par exemple un apport d'énergie provenant d'un moteur servant à produire l'énergie hydraulique nécessaire au fonctionnement de vérins hydrauliques;
- ils permettent un verrouillage automatique du dispositif de guidage avant, en même temps qu'un déverrouillage automatique du dispositif de guidage arrière, les termes "avant" et "arrière" faisant référence à la position des dispositifs de guidage par rapport à l'essieu directeur lors d'un déplacement du véhicule;
- ils garantissent un encombrement faible et une réalisation simple du dispositif de verrouillage.

## Revendications

1. Méthode de verrouillage d'un système de guidage d'un véhicule guidé par au moins un rail (1), comprenant:
- une association d'un premier et d'un second vérin (421, 422) avec respectivement un premier et second dispositif de guidage (331, 332, 341, 342) appartenant au système de guidage d'un essieu directeur (5) du véhicule guidé,
- au moins un premier et second état de configuration desdits vérins (421, 422) plaçant leurs dispositifs de guidage respectifs (331, 332, 341, 342) dans respectivement un premier et un second état de guidage,
- une alimentation en énergie desdits vérins (421, 422) par un dispositif d'alimentation (41) pour commuter les états de configuration de chaque vérin (421, 422),
**caractérisée en ce qu'**elle comporte
- un couplage du dispositif d'alimentation (41) à au moins un organe rotatif (2) dont une rotation est liée mécaniquement au déplacement du véhicule,
- une commutation de l'alimentation en énergie desdits vérins entraînant une commutation de l'état de configuration desdits vérins en fonction d'un changement d'un sens de rotation de l'organe rotatif (2), ledit changement étant transmis par ledit couplage.

2. Méthode de verrouillage selon revendication 1 **caractérisée par** un contrôle de l'état de configuration de chacun desdits vérins (421, 422) afin de s'assurer d'un fonctionnement correct desdits vérins (421, 422) en cohérence avec un sens de déplacement du véhicule.

3. Méthode de verrouillage selon une des revendications 1 ou 2 **caractérisée par** une production de l'énergie nécessaire à l'alimentation en énergie desdits vérins (421, 422) dépendante d'une énergie mécanique de rotation créée par la rotation dudit organe rotatif (2).

4. Méthode de verrouillage selon une des revendications 1 à 3 **caractérisée par** une transformation de ladite énergie mécanique de rotation en ladite énergie alimentant lesdits vérins.

5. Méthode de verrouillage selon une des revendications 1 à 4 **caractérisée en ce que** ladite rotation dudit organe rotatif (2) entraîne une pompe réversible (41) apte à produire ladite énergie nécessaire à l'alimentation en énergie desdits vérins (421, 422).

6. Dispositif de verrouillage d'un système de guidage d'un véhicule guidé par au moins un rail (1), comprenant:
- un premier et un second vérin (421, 422) pouvant être associés respectivement à un premier et un second dispositif de guidage (331, 332, 341, 342) appartenant au système de guidage d'un essieu directeur (5) du véhicule guidé, chacun desdits vérins (421, 422) comportant au moins deux états de configurations caractéristiques: un premier état de configuration capable de placer le dispositif de guidage auquel le vérin est associable dans un premier état de guidage, et un second état de configuration capable de placer le dispositif de guidage auquel le vérin est associable dans un second état de guidage,
- un dispositif d'alimentation (41) en énergie apte à alimenter en énergie lesdits vérins (421, 422) pour commuter l'état de configuration de chacun desdits vérins (421, 422),
**caractérisé en ce que**
- le dispositif d'alimentation (41) est accouplable, au moyen d'un organe de couplage, à au moins un organe rotatif (2) dont une rotation est liée mécaniquement au déplacement du véhicule, de sorte qu'un changement d'un sens de rotation dudit organe rotatif (2) est transmis audit dispositif d'alimentation par ledit organe de couplage et entraîne une commutation de l'état de configuration desdits vérins.

7. Dispositif de verrouillage selon revendication 6, **caractérisé en ce que** ledit dispositif d'alimentation (41) est apte à automatiquement commuter ledit état de configuration desdits vérins (421, 422) lors d'un changement du sens de rotation dudit organe rotatif (2).

8. Dispositif de verrouillage selon une des revendications 6 ou 7, **caractérisé en ce qu'**un dispositif de contrôle (6) est apte à vérifier l'état de configuration de chacun desdits vérins (421, 422) afin de s'assurer d'un fonctionnement correct desdits vérins (421, 422) en cohérence avec un sens de déplacement du véhicule.

9. Dispositif de verrouillage selon une des revendications 6 à 8, **caractérisé en ce que** le dispositif d'alimentation (41) est apte à produire l'énergie d'alimentation desdits vérins (421, 422).

10. Dispositif de verrouillage selon une des revendications 6 à 9, **caractérisé en ce que** le dispositif d'alimentation (41) est apte à transformer une énergie mécanique de rotation, créée par ladite rotation dudit organe rotatif (2), en énergie apte à alimenter lesdits vérins (421, 422).

11. Dispositif de verrouillage selon une des revendications 6 à 10, **caractérisé en ce que** le dispositif d'alimentation (41) comprend une pompe réversible.

12. Dispositif de verrouillage selon une des revendications 6 à 11, **caractérisé en ce que** ladite pompe réversible est apte à être directement entraînée par la rotation dudit organe rotatif (2).

13. Dispositif de verrouillage selon une des revendications 6 à 12, **caractérisé en ce que** ledit organe rotatif (2) est une roue servant au déplacement dudit véhicule.

14. Dispositif de verrouillage selon une des revendications 11 à 13, **caractérisé en ce que** ladite pompe réversible est apte à automatiquement commuter lesdits états de configuration desdits vérins (421, 422) en fonction dudit sens de rotation dudit organe rotatif (2).

15. Dispositif de verrouillage selon une des revendications 6 à 14, **caractérisé en ce qu'**un système de contrôle est apte à communiquer avec chacun desdits dispositifs de contrôle (6) de chaque essieu afin de signaler un disfonctionnement d'un dispositif de guidage.

## Patentansprüche

1. Verfahren zur Verriegelung eines Führungssystems eines durch mindestens eine Schiene (1) geführten Fahrzeugs, umfassend:
- eine Verbindung eines ersten und eines zweiten Zylinders (421, 422) mit jeweils einer ersten und zweiten Führungsvorrichtung (331, 332, 341, 342), die zu einem Führungssystem einer Lenkachse (5) des geführten Fahrzeugs gehören,
- mindestens einen ersten und einen zweiten Konfigurationszustand der Zylinder (421, 422), wodurch deren jeweilige Führungsvorrichtungen (331, 332, 341, 342) in jeweils einen ersten und einen zweiten Führungszustand gestellt werden,
- eine Versorgung der Zylinder (421, 422) mit Energie durch eine Versorgungseinrichtung (41), um die Konfigurationszustände eines jeden Zylinders (421, 422) umzuschalten,
**dadurch gekennzeichnet, dass** es
- eine Kopplung der Versorgungseinrichtung (41) mit mindestens einem Drehelement (2), dessen Drehung mit der Bewegung des Fahrzeugs mechanisch verbunden ist,
- eine Umschaltung der Energieversorgung der Zylinder, wodurch eine Umschaltung des Konfigurationszustands der Zylinder als Funktion eines Wechsels der Drehrichtung des Drehelements (2) bewirkt wird, wobei der Wechsel durch die Kopplung übertragen wird, umfasst.

2. Verriegelungsverfahren nach Anspruch 1, **gekennzeichnet durch** eine Steuerung des Konfigurationszustands eines jeden der Zylinder (421, 422), um eine ordnungsgemäße Funktionsweise der Zylinder (421, 422) in Übereinstimmung mit einer Bewegungsrichtung des Fahrzeugs zu gewährleisten.

3. Verriegelungsverfahren nach einem der Ansprüche 1 oder 2, **dadurch gekennzeichnet, dass** die Erzeugung der Energie, die zur Energieversorgung der Zylinder (421, 422) erforderlich ist, von einer durch die Drehung des Drehelements (2) erzeugten mechanischen Rotationsenergie abhängig ist.

4. Verriegelungsverfahren nach einem der Ansprüche 1 bis 3, **gekennzeichnet durch** eine Umwandlung der mechanischen Rotationsenergie in die Energie zur Versorgung der Zylinder.

5. Verriegelungsverfahren nach einem der Ansprüche 1 bis 4, **dadurch gekennzeichnet, dass** die Drehung des Drehelements (2) eine Reversierpumpe (41) antreibt, die zur Erzeugung der für die Energieversorgung der Zylinder (421, 422) erforderlichen Energie geeignet ist.

6. Vorrichtung zur Verriegelung eines Führungssystems eines durch mindestens eine Schiene (1) geführten Fahrzeugs, umfassend:
- einen ersten und einen zweiten Zylinder (421, 422), die jeweils mit einer ersten und einer zweiten Führungsvorrichtung (331, 332, 341, 342) verbunden sein können, die zum Führungssystem einer Lenkachse (5) des geführten Fahrzeugs gehören, wobei jeder der Zylinder (421, 422) mindestens zwei charakteristische Konfigurationszustände umfasst: einen ersten Konfigurationszustand, der dazu geeignet ist, die Führungsvorrichtung, welcher der Zylinder zuordenbar ist, in einen ersten Führungszustand zu stellen, und einen zweiten Konfigurationszustand, der dazu geeignet ist, die Führungsvorrichtung, welcher der Zylinder zuordenbar ist, in einen zweiten Führungszustand zu stellen,
- eine Energieversorgungseinrichtung (41), die dazu geeignet ist, die Zylinder (421, 422) mit Energie zu versorgen, um den Konfigurationszustand eines jeden der Zylinder (421, 422) umzuschalten,
**dadurch gekennzeichnet, dass**
- die Versorgungseinrichtung (41) mittels eines Koppelelements mit mindestens einem Drehelement (2) koppelbar ist, dessen Drehung mit der Bewegung des Fahrzeugs so mechanisch verbunden ist, dass eine Änderung der Drehrichtung des Drehelements (2) durch das Koppelelement zur Versorgungsvorrichtung übertragen wird und eine Umschaltung des Konfigurationszustands der Zylinder bewirkt.

7. Verriegelungsvorrichtung nach Anspruch 6, **dadurch gekennzeichnet, dass** die Versorgungseinrichtung (41) dazu geeignet ist, den Konfigurationszustand der Zylinder (421, 422) bei einem Wechsel der Drehrichtung des Drehelements (2) automatisch umzuschalten.

8. Verriegelungsvorrichtung nach einem der Ansprüche 6 oder 7, **dadurch gekennzeichnet, dass** eine Steuervorrichtung (6) dazu geeignet ist, den Konfigurationszustand eines jeden der Zylinder (421, 422) zu überprüfen, um eine ordnungsgemäße Funktionsweise der Zylinder (421, 422) in Übereinstimmung mit einer Bewegungsrichtung des Fahrzeugs zu gewährleisten.

9. Verriegelungsvorrichtung nach einem der Ansprüche 6 bis 8, **dadurch gekennzeichnet, dass** die Versorgungseinrichtung (41) zur Erzeugung der Energie zur Versorgung der Zylinder (421, 422) geeignet ist.

10. Verriegelungsvorrichtung nach einem der Ansprüche 6 bis 9, **dadurch gekennzeichnet, dass** die Versorgungseinrichtung (41) dazu geeignet ist, durch die Drehung des Drehelements (2) erzeugte mechanische Rotationsenergie in zur Versorgung der Zylinder (421, 422) geeignete Energie umzuwandeln.

11. Verriegelungsvorrichtung nach einem der Ansprüche 6 bis 10, **dadurch gekennzeichnet, dass** die Versorgungseinrichtung (41) eine Reversierpumpe umfasst.

12. Verriegelungsvorrichtung nach einem der Ansprüche 6 bis 11, **dadurch gekennzeichnet, dass** die Reversierpumpe durch die Drehung des Drehelements (2) direkt antreibbar ist.

13. Verriegelungsvorrichtung nach einem der Ansprüche 6 bis 12, **dadurch gekennzeichnet, dass** es sich beim Drehelement (2) um ein Rad handelt, das zum Bewegen des Fahrzeugs dient.

14. Verriegelungsvorrichtung nach einem der Ansprüche 11 bis 13, **dadurch gekennzeichnet, dass** die Reversierpumpe dazu geeignet ist, die Konfigurationszustände der Zylinder (421, 422) als Funktion der Drehrichtung des Drehelements (2) automatisch umzuschalten.

15. Verriegelungsvorrichtung nach einem der Ansprüche 6 bis 14, **dadurch gekennzeichnet, dass** ein Steuersystem dazu geeignet ist, mit jeder der Steuervorrichtungen (6) einer jeden Achse zu kommunizieren, um eine Fehlfunktion einer Führungsvorrichtung zu signalisieren.

## Claims

1. Method for locking a guiding system of a vehicle guided by at least one rail (1), including:
- a connection of a first and a second cylinder (421, 422) with, respectively, a first and second guiding device (331, 332, 341, 342) belonging to the guiding system of a steering axle (5) of the guided vehicle,
- at least one first and second configuration state of said cylinders (421, 422) placing their respective guiding devices (331, 332, 341, 342) in a first and a second guiding state respectively,
- a power supply to said cylinders (421, 422) via a supply device (41) in order to switch the configuration states of each cylinder (421,422),
**characterised in that** it includes
- a coupling of the supply device (41) to at least one rotary member (2) the rotation of which is mechanically linked to the movement of the vehicle,
- a switching of the power supply of said cylinders causing the configuration state of said cylinders to be switched according to a change in direction of rotation of the rotary member (2), said change being transmitted by said coupling.

2. Locking method according to claim 1, **characterised by** control of the configuration state of each of said cylinders (421, 422) in order to ensure correct operation of said cylinders (421, 422) consistently with a direction of movement of the vehicle.

3. Locking method according to one of claims 1 or 2, **characterised by** production of the power necessary for the power supply to said cylinders (421, 422) dependent on mechanical rotary power created by the rotation of said rotary member (2).

4. Locking method according to one of claims 1 to 3, **characterised by** a transformation of said mechanical rotary power into said power supplying said cylinders.

5. Locking method according to one of claims 1 to 4, **characterised in that** said rotation of said rotary member (2) influences a reversible pump (41) suitable for producing said power necessary for supplying power to said cylinders (421, 422).

6. Device for locking a system for guiding a vehicle guided by at least one rail (1), including:
- a first and a second cylinder (421, 422) which can be connected respectively to a first and a second guiding device (331, 332, 341, 342) belonging to the guiding system of a steering axle (5) of the guided vehicle, each of said cylinders (421, 422) comprising at least two characteristic configuration states: a first configuration state capable of placing the guiding device to which the cylinder can be connected in a first guiding state, and a second configuration state capable of placing the guiding device to which the cylinder can be connected in a second guiding state,
- a power supply device (41) suitable for supplying power to said cylinders (421, 422) in order to switch the configuration state of each of said cylinders (421, 422),
**characterised in that**
- the supply device (41) can be coupled, by means of a coupling member, to at least one rotary member (2), the rotation of which is mechanically linked to the movement of the vehicle, such that a change in direction of rotation of said rotary member (2) is transmitted to said supply device by said coupling member and causes a switching of the configuration state of said cylinders.

7. Locking device according to claim 6, **characterised in that** said supply device (41) is suitable for automatically switching said configuration state of said cylinders (421, 422) when the rotation of said rotary member (2) changes direction.

8. Locking device according to one of claims 6 or 7, **characterised in that** a control device (6) is suitable for verifying the configuration state of each of said cylinders (421, 422) in order to ensure correct operation of said cylinders (421, 422) consistently with a direction of movement of the vehicle.

9. Locking device according to one of claims 6 to 8, **characterised in that** the supply device (41) is suitable for producing power for supplying to said cylinders (421, 422).

10. Locking device according to one of claims 6 to 9, **characterised in that** the supply device (41) is suitable for transforming mechanical rotary power, created by said rotation of said rotary member (2), into power suitable for supplying to said cylinders (421, 422).

11. Locking device according to one of claims 6 to 10, **characterised in that** the power supply device (41) includes a reversible pump.

12. Locking device according to one of claims 6 to 11, **characterised in that** said reversible pump is suitable for being directly influenced by the rotation of said rotary member (2).

13. Locking device according to one of claims 6 to 12, **characterised in that** said rotary member (2) is a wheel used for movement of said vehicle.

14. Locking device according to one of claims 11 to 13, **characterised in that** said reversible pump is suitable for automatically switching said configuration states of said cylinders (421, 422) according to said direction of rotation of said rotary member (2).

15. Locking device according to one of claims 6 to 14, **characterised in that** a control system is suitable for communicating with each of said control devices (6) of each axle in order to signal a malfunction in the guiding device.
